# EUROPÄISCHE PATENTANMELDUNG

(11) **EP 3 504 977 A1**
(43) Veröffentlichungstag der Anmeldung: **03.07.2019**
(21) Anmeldenummer: 19154619.1
(22) Anmeldetag: 27.08.2014
(51) Int. Cl.: A22C 15/00, A22C 17/10, A22C 13/00, B65D 81/28

(54) **VERWENDUNG VON BLASEXTRUDIERTEN FOLIEN AUS DETEKTIONSFÄHIGEM KUNSTSTOFF**

(30) Priorität: 09.09.2013 DE 202013104090 U; 21.08.2014 DE 102014216677
(62) Teilanmeldung aus: 14182535.6
(71) Anmelder: Viskase Companies, Inc., Lombard, IL 60148 (US)
(72) Erfinder: Flader, Carsten, 45770 Marl (DE); Herr, Erik, 36448 Schweina (DE)
(74) Vertreter: Von Rohr Patentanwälte Partnerschaft mbB

(57) **Zusammenfassung**

Die Erfindung betrifft die Verwendung von blasextrudierten Folien aus detektionsfähigem Kunststoff zur Herstellung schlauchförmiger Verpackungen.

## Beschreibung

Die Erfindung betrifft die Verwendung von blasextrudierten Folien aus detektionsfähigem Kunststoff zur Herstellung schlauchförmiger Verpackungen.

Die Erfindung betrifft des Weiteren detektionsfähige magazinierte Aufhängeschlaufen für Verpackungen, insbesondere für schlauchförmige Verpackungen pastöser Massen oder für netzförmige Verpackungen fester Stoffe.

Derartige Schlaufen sind aus dem Stand der Technik bekannt und werden zum Verschluss und/oder zur Aufhängungen von Verpackungen eingesetzt. Dabei wird die Verpackung entweder direkt mittels der verknoteten Schlaufe oder mit einem Verschlussclip verschlossen. Bei der Nutzung von Verschlussclips dient die Schlaufe lediglich der Aufhängung und ist über den Clip kraftschlüssig oder aber mittels separater Befestigung kraft-, form- und/oder stoffschlüssig mit der Verpackung verbunden. So ist auch das Ankleben oder Anschmelzen der Schlaufen an die Verpackung aus dem Stand der Technik bekannt.

Die Aufhänge- und/oder Verschlussschlaufen sind gewöhnlich aus mehrfach verzwirnten Kunststoffgarnen, bspw. aus Polypropylen, Polyamid, Polyester, Polyetheretherketon oder Polyoxymethylen gebildet. In der Wurstherstellung bestehen die Schlaufen häufig aus demselben Material wie die verwendeten Schlauchfolien, Kunstdärme oder Naturdärme, um eine Beschädigung der Verpackung beim Kontakt mit der Schlaufe zu verhindern.

Üblicherweise werden die Schlaufen den Verschluss- oder Clipmaschinen bereits abgelängt und einseitig verschlossen, vorzugsweise verknotet, zugeführt. Dabei sind sie auf einem ebenen Trägerband fixiert oder auf einem stab- oder ringförmigen Magazin aufgehängt.

Der Verschluss von schlauchförmigen Verpackungen pastöser Füllgüter, bspw. in der Wurstherstellung, aber auch das Anbringen von Schlaufen an netzförmige Verpackungen, bspw. an Räucherkäse, erfolgt heutzutage in hochgetackten Verschluss- oder Clipmaschinen mit pulsierenden Füllkräften sowie schnell bewegten Teilen. Die Maschinen selbst halten den hohen mechanischen Beanspruchungen in der Regel stand. Die eingesetzten Verpackungsmaterialien können jedoch sowohl bei der Zuführung als auch beim Befüll- und Verschlussvorgang beschädigt werden, wobei die Gefahr besteht, dass Teile der Verpackungsmaterialien in das Füllgut geraten. Dies ist gesundheitlich bedenklich und kann zu Beschädigungen an den eingesetzten Maschinen und zu Verletzungen auf Verbraucherseite führen.

Zur Lösung dieses Problems schlägt die DE 103 05 580 A1 eine Schlaufe mit Metalleinlage vor, die zum Verschluss einer Schlauchfolie bzw. einer Wursthülle aus Kunstdarm verwendet wird. Die Schlaufe ist aus 2- bis 8-fach gezwirntem Garn gebildet und weist weiterhin bis zu 10 eingezwirnte Metallfäden oder -drähte eines Durchmessers von 0,05 bis 0,3 mm auf. Durch den eingezwirnten Metallfaden soll das verwendete Garn somit über gängige Metalldetektoren detektiert werden können. Zudem soll ein Knoten dieser Schlaufe eine solche Verschlusssicherheit gewährleisten, dass das eingesetzte Garn sowohl für den Verschluss als auch für die Aufhängeschlaufe genutzt werden kann und ein Verschlussclip verzichtbar ist. Ursache dafür ist, die geringe Elastizität der genutzten Garne.

Die DE 20 2004 007 735 U1 schlägt vor, für das Abbinden von Wursthüllen ein Garn zu nutzen, in das ein oder mehrere Metallfäden eingearbeitet oder eingeflochten sind. Bevorzugt wird eine hohe Steifigkeit des vorgeschlagenen Garns, das insbesondere eine geringe Dehnung aufweisen soll. Als besonderer Vorteil wird hervorgehoben, dass eine zusätzliche Verclippung zum Verschluss der Wursthüllen nicht erforderlich ist.

Nachteilig an dieser Lösung ist jedoch, dass die vorgeschlagenen Garne mit Metallfäden zu einem erhöhten Verschleiß der zum Ablängen des Garns benutzten Schneidmittel führen. Zudem besteht aufgrund abweichender Materialeigenschaften von Metall und Kunststoff die Gefahr eines Auskragens oder sogar des Ablösens des Metallfadens aus dem Kunststoffgarn nach dem Ablängen. Dies resultiert, gerade entgegen der gestellten Aufgabe, in einer erhöhten Verschmutzungsgefahr der Lebensmittel bzw. Verletzungsgefahr auf Verbraucherseite.

Eine Aufgabe der vorliegenden Erfindung ist es nunmehr, detektionsfähige schlauchförmiger Verpackungen auf Basis von blasextrudierten Folien aus detektionsfähigem Kunststoff bereitzustellen.

Diese Aufgabe wird gelöst durch die erfindungsgemäße Verwendung mit den Merkmalen des Hauptanspruchs; vorzugsweise Weiterbildungen sind Gegenstand der jeweils rückbezogenen Unteransprüche.

Eine weitere Aufgabe der vorliegenden Erfindung ist es daher detektionsfähige Aufhängeschlaufen für Verpackungen vorzuschlagen, die eine verunreinigungsfreie Verarbeitung, insbesondere beim Ablängen des Garns, sowie eine hohe Detektionsfähigkeit gewährleisten. Weiterhin soll ein Trägersystem für derartige Aufhängeschlaufen vorgeschlagen werden, mit dem die Gefahr unerkannter Kontamination von Lebensmitteln weiter minimiert wird.

Diese Aufgabe wird gelöst durch eine Schlaufe mit den Merkmalen des ersten Aspekts sowie der Aspekte 8 und 9; vorzugsweise Weiterbildungen sind Gegenstand der jeweils rückbezogenen Aspekte.

Die erfindungsgemäße Aufgabe wird gelöst durch eine Aufhängeschlaufe (Schlaufe), bestehend aus einem mehrfach verzwirnten oder verflochtenen Kunststoffgarn oder einem Kunststoffband, bzw. durch die erfindungsgemäße Verwendung von blasextrudierten Folien aus detektionsfähigem Kunststoff zur Herstellung schlauchförmiger Verpackungen, wobei polarisierbare Partikel in dem Kunststoff enthalten und/oder auf den Kunststoff aufgetragen sind. Unter "polarisierbar" wird das Vorhandensein einer elektrischen und/oder magnetischen Polarisierbarkeit verstanden.

Zur Ausbildung der Schlaufe aus Kunststoffgarn werden bevorzugt 2 bis 8 Fäden des Garns miteinander zu einem (Endlos-) Faden verzwirnt oder verflochten. Bei der Ausbildung der Schlaufe aus einem Kunststoffband wird der Kunststoff bevorzugt bandförmig strang- oder blasextrudiert oder eine derart extrudierte Kunststofffolie zu einem Band gefaltet. Das verzwirnte oder verflochtene Kunststoffgarn oder das Kunststoffband werden zur Ausbildung der Schlaufe auf eine gewünschte Länge abgelängt und die losen Enden anschließend verbunden, bevorzugt verknotet, und die Schlaufe somit einseitig verschlossen.

Erfindungsgemäß sind im Kunststoff polarisierbare Partikel enthalten, die bevorzugt vereinzelt oder in Form kleinerer Agglomerate (weniger als 50 Partikel) vorliegen. Die polarisierbaren Partikel liegen ohne Fernordnung in dem Kunststoff vor. Die Partikel weisen jedoch eine weitgehend konstante Partikeldichte in dem Kunststoff auf. Dabei wird die Gleichmäßigkeit der Verteilung der polarisierbaren Partikel in dem Kunststoff durch ausreichendes Dispergieren des Kunststoffs und den beigemischten Partikeln erreicht.

Erfindungsgemäß sind alternativ oder kumulativ polarisierbare Partikel auf die Oberfläche des Kunststoffs, des Kunststoffgarns, des Kunststoffbandes oder der einseitig geschlossenen Schlaufe aufgetragen. Dies geschieht vorzugsweise durch eine Lackierung des Kunststoffs bzw. der Schlaufe mit einer Formulierung, enthaltend polarisierbare Partikel. Diese Partikel sind in der Formulierung vorzugsweise in einem flüchtigen Lösungsmittel und gegebenenfalls einer Klebstoff- oder Lackkomponente suspendiert. Die Konzentration der Partikel ist dabei derart, dass durch ein oder mehrfache Benetzung der Kunststoffoberfläche bzw. der Schlaufenoberfläche so viele Partikel an dieser anhaften, dass eine Detektionsfähigkeit des Kunststoffs bzw. der Schlaufe gegeben ist.

Die Polarisierbarkeit der Partikel ist in Ihrer Gesamtheit derart, dass die erfindungsgemäße Aufhängeschlaufe bzw. die schlauchförmige Verpackung die vorteilhaft mit gängigen Metalldetektoren detektierbar ist. Dabei kann die Detektierbarkeit der Schlaufe bzw. der schlauchförmigen Verpackung über die Erhöhung der Polarisierbarkeit der Einzelpartikel oder der zugemischten Partikelmenge verbessert werden. Besonders bevorzugt ist die Polarisierbarkeit der Schlaufe bzw. der schlauchförmigen Verpackung derart, dass auch einzelne Teile der Schlaufe bzw. der schlauchförmigen Verpackung in gängigen Metalldetektoren sicher detektiert werden können.

Die erfindungsgemäße Aufhängeschlaufe bzw. die schlauchförmige Verpackung ermöglicht vorteilhaft die Überwachung eines Verpackungsprozesses hinsichtlich der Verschmutzung der zu verpackenden Güter mit Teilen der Schlaufe oder ganzen Schlaufen bzw. mit der schlauchförmige Verpackung. Dies erfolgt vorteilhaft mittels gängiger und einfach in den Prozess zu integrierender Metalldetektoren. Bereits bei der Herstellung der Schlaufen aus einem (Endlos-)-Kunststoffgarn kommt es, im Vergleich zum Stand der Technik, vorteilhaft zu einem geringeren Verschleiß der eingesetzten Schneidmittel. Weiterhin vorteilhaft weisen die Schneidkanten des Kunststoffgarns keine auskragenden Teile und weitgehend glatte Schnittflächen auf. Somit wird eine Beschädigung der Schlauchfolie oder des Darms, die als Verpackung dienen, vorteilhaft vermieden.

In einer bevorzugten Ausführungsform enthält der Kunststoff polarisierbare Partikel einer Größe von 50 nm bis 1 mm, besonders bevorzugt von 0,5 µm bis 0,5 mm und ebenfalls bevorzugt zwischen 0,05 mm und 0,5 mm. Das nahezu homogene Einbringen von polarisierbaren Partikeln dieser Größe in einen Kunststoff ermöglicht vorteilhaft ein Optimum hinsichtlich Detektionsfähigkeit, Schneidbarkeit und der Menge der benötigten Partikel. In einer ebenfalls bevorzugten Ausführungsform werden auf die Partikel mit einer Größe von 50 nm bis 0,5 mm, besonders bevorzugt von 50 nm bis 50 µm und ebenfalls bevorzugt von 50 nm bis 1 µm auf die Oberfläche des Kunststoffs, des Kunststoffgarns, des Kunststoffbandes oder der einseitig geschlossenen Schlaufe aufgetragen. In diesem Größenbereich ist eine maximale Anhaftung der Partikel aufgrund von Adhäsion bzw. molekularen Wechselwirkungen gegeben.

Die Partikel weisen dabei in einer ersten bevorzugten Ausführungsform eine annähernd kugelförmige oder auch unregelmäßig n-eckige Form auf, wobei die angegeben Größen sich auf den Äquivalenzdurchmesser, insbesondere den volumenäquivalenten Kugeldurchmesser beziehen, der auf bekannte Art mittels Siebung und Fraktionierung oder durch Sedimentationsanalysen bestimmbar ist. Insbesondere sind die polarisierbaren Partikel in dieser Ausführungsform nicht als Metallfäden oder ähnliche ausgeprägt längserstreckte Gebilde ausgeführt, da dies nachteilig zu einem verstärkten Verschleiß der Schneidwerkzeuge beim Ablängen führt.

Ebenfalls bevorzugt sind Metallpartikel als polarisierende Partikel in dem Kunststoff bzw. Kunststoffgarn enthalten. Metalle, insbesondere rostfreiere Stahl, weisen vorteilhaft eine hohe Polarisierbarkeit sowie eine gute Verarbeitbarkeit- und Verfügbarkeit auf. Vorteilhaft werden zur Herstellung des Kunststoffs bzw. des Kunststoffgarns Metall- und Kunststoffgranulat vermischt, der Kunststoff aufgeschmolzen und die entstandene Suspension extrudiert.

In einer weiteren bevorzugten Ausführungsform sind als polarisierbare Partikel Metallfasern mit einer Länge zwischen 0,05 bis 5 mm, ebenfalls bevorzugt von 0,1 bis 3 mm, enthalten. Die Fasern weisen dabei ein Verhältnis von Länge zu Durchmesser (bzw. zu Dicke und Breite) von mindestens 3:1, bevorzugt von mindestens 10:1 und besonders bevorzugt von mindestens 50:1 auf. Dies ermöglicht vorteilhaft die Herstellung eines detektionsfähigen Kunststoffs bzw. Kunststoffgarns aus blasextrudierten Kunststofffolien durch Abtrennung einzelner Folienbänder und deren Verdrillung. Besonders vorteilhaft erfolgt bei der Blasextrusion ein Einregeln der längsausgedehnten Metallfasern in die Folienebene. Somit ist wird vorteilhaft ein hoher Metallanteil in der Folie und eine hohe Detektionsfähigkeit der Schlaufen realisierbar, wobei die Gefahr des Auskragens der Metallfäden aus der Folie minimal ist.

Besonders bevorzugt enthält der Kunststoff bzw. das Kunststoffgarn polarisierbare Partikel mit einem Gewichtsanteil von 1 bis 50 Gew.-%, bevorzugt zwischen 5 und 40 Gew.-% und besonders bevorzugt zwischen 10 und 30 Gew.-%. Somit ist vorteilhaft eine gute Verarbeitbarkeit des Kunststoffs bzw. Kunststoffgarns sowie eine hohe Detektionsfähigkeit der Schlaufen bzw. Schlaufenteile bzw. schlauchförmigen Verpackungen realisierbar. Insbesondere bei hohen Gewichtsanteilen sind vorzugsweise Partikel mit geringen Partikelgrößen, insbesondere kleiner 0,5 mm, zu verwenden, um eine gute Vernetzung des Kunststoffs und somit eine hohe stoffliche Integrität des Kompositmaterials zu gewährleisten.

Die polarisierbaren Partikel sind vorzugsweise stochastisch in das Garn bzw. den Kunststoff eingeregelt, wobei sich deren Verteilung durch das Mischen von Kunststoff- und Metallgranulat sowie das Dispergieren der in der Kunststoffschmelze enthaltenen Metallpartikel einstellt. Über eine intensive Mischung der Kunststoff- und der Metallkomponente ist somit ein Kunststoffgarn bzw. ein Kunststoff mit gleichmäßiger Polarisierbarkeit herstellbar, was aufgrund der regelmäßigen Verteilung der Metallpartikel eine gute Abtrennbarkeit des Garns bzw. Kunststoffs gewährleistet.

Weiterhin bevorzugt enthält das Kunststoffgarn Aramidfasern, Kohlefasern, Leitruße oder Grafite. Mit zusätzlich zu den polarisierbaren Partikeln vorliegenden Aramid- und Kohlefasern können vorteilhaft die mechanischen Eigenschaften der Schlaufen verbessert werden. Insbesondere durch Kurzfaserverstärkung ist einer Erhöhung der Reißfestigkeit der Schlaufen bei gleichbleibend guter Schneidbarkeit möglich. Durch die weiterhin bevorzugte Zugabe von Leitrußen, Grafiten oder Kohlefasern, als polarisierbare oder zusätzliche Partikel, ist eine höhere Leitfähigkeit des Kunststoffgarns einstellbar. Somit kann vorteilhaft dessen Impedanz zur Detektion der Schlaufen, insbesondere an Haltemitteln oder im Magazin, genutzt werden. Ebenfalls bevorzugt sind im Kunststoffgarn antistatisch oder antibakteriell wirkende Partikel oder Fasern, besonders bevorzugt Silberoxid-Partikel, eingebracht. Vorteilhaft kann so das Eigenschaftsprofil der Schlaufen an in der Lebensmitteltechnik herrschende Anforderungen angepasst werden.

Als Kunststoffkomponente werden, je nach gewünschtem Eigenschaftsprofil, bevorzugt alle in der Lebensmitteltechnik verwendeten Kunststoffe eingesetzt. Besonders bevorzugt ist die Kunststoffkomponente der Aufhänge- und Verschlussschlaufe bzw. Kunststoffs aus PPA, PPS, PES, PEI, PEEK, PEEK-HT, I PC, PBT, PET, PA 6.6 und/oder PA 4.6 gebildet.

Ebenfalls Gegenstand der Erfindung ist die Verwendung eines detektionsfähigen Kunststoffs zur Herstellung von Schlaufen für die Aufhängung und/oder zum Verschluss schlauch- oder netzförmiger Verpackungen bzw. die Verwendung von blasextrudierten Folien aus detektionsfähigem Kunststoff zur Herstellung schlauchförmiger Verpackungen. Detektionsfähige Kunststoffe sind dabei Kunststoffe, die mittels gängiger Metalldetektoren elektrisch oder magnetisch oder mittels Röntgenspektroskopie detektierbar sind. Dazu werden vorzugsweise Kunststoffe eingesetzt, die elektrisch polarisierbare oder magnetisierbare Partikel enthalten. Derartige Kunststoffe sind aus dem Stand der Technik zur Herstellung von Prozessmaschinen, auch aus der Lebensmitteltechnik, bekannt. Die Verwendung derartiger Kunststoffe für Schlaufen zum Aufhängen schlauchförmiger Verpackungen pastöser Massen oder netzförmiger Verpackungen fester Stoffe bzw. für schlauchförmige Verpackungen ermöglicht vorteilhaft die Detektion von Verpackungsteilen im Endprodukt und somit eine effiziente Qualitätskontrolle. Weiterhin vorteilhaft kann die Detektionsfähigkeit der Schlaufen bzw. der schlauchförmigen Verpackungen zur Prozesskontrolle, bspw. für Zählwerke, genutzt werden. Als besonders vorteilhaft ist anzusehen, dass die polarisierbaren Partikel, die die Detektionsfähigkeit gewährleisten, im gesamten Material der Schlaufe bzw. des Kunststoffs dispergiert sind. Während in ein Garn nach dem Stand der Technik integrierte Metallfäden zwar selbst detektierbar sind, wird das Garn nach dem Ablösen der Metallfäden nicht mehr erkannt und kann daher irrtümlich im Produkt verbleiben. Demgegenüber sind auch kleine Abschnitte oder Teilstücke der erfindungsgemäßen Schlaufe bzw. der schlauchförmigen Verpackungen mittels Metalldetektor oder eines anderen, die Polarisierbarkeit des Schlaufenmaterials ausnutzenden Gerätes erkennbar.

Ebenfalls Gegenstand der Erfindung ist die Verwendung eines detektionsfähigen Kunststoffs zur Herstellung von ebenen Trägerbändern für die Aufnahme einer Vielzahl von Aufhängeschlaufen. Die Aufhängeschlaufen werden den Verschluss- oder Clipmaschinen bereits abgelängt und einseitig verschlossen, vorzugsweise verknotet, zugeführt. Dabei sind sie in der Regel auf einen ebenen Trägerband thermisch oder mittels Ultraschall und beabstandet zueinander fixiert. In der Verschluss- oder Clipmaschine wird die vorgefertigte Schlaufe von dem Trägerband abgenommen und über den Clip oder unabhängig von diesem an der Verpackung befestigt. Dabei besteht die Gefahr, dass Teile des Trägerbandes mitgerissen und in das zu verpackende Produkt eingebracht werden. Vorteilhaft ist daher auch das Trägerband aus detektionsfähigem Kunststoff gebildet, um ein etwaig verschmutztes Produkt detektieren und aussortieren zu können. Bevorzugt ist dabei die Zusammensetzung des Trägerbandes zur Zusammensetzung der erfindungsgemäßen Aufhängeschlaufe identisch.

Weiterhin Gegenstand der Erfindung ist die Verwendung eines detektionsfähigen Kunststoffs zur Herstellung von Rollenkernen für das Aufwickeln des Trägerbandes. Aus denselben Gründen, wie hinsichtlich des Trägerbandes aufgeführt, ist eine Detektionsfähigkeit des Rollenkerns vorteilhaft für die Qualitätskontrolle in Verpackungsprozessen. Insbesondere beim vollständigen Abwickeln des Trägerbandes vom Spulenkern besteht die Gefahr eines Abrisses des Trägerbandes vom Spulenkern und einer Verschmutzung des Verpackungsgutes. Durch die Verwendung eines detektionsfähigen Kunststoffs werden auch derart verschmutzte Produkte detektiert und aussortiert.

Besonders bevorzugt werden zur Herstellung der erfindungsgemäßen Aufhängeschlaufen und Trägerbänder aus detektionsfähigem Kunststoff blasextrudierte Folien als Ausgangsstoff verwendet. Die Folien enthalten dabei vorzugsweise in die Folienebene eingeregelte Metallfasern als polarisierbare Partikel. Das Kunststoffgarn wird durch Vereinzelung der Folienbahn in Folienstreifen sowie deren Verdrillung erzeugt. Die als Kunststoffband ausgebildeten Aufhängeschlaufen werden, in Abhängigkeit der Dicke der blasextrudierten Folien, durch Vereinzelung und gegebenenfalls durch Falten der Folie auf die gewünschte Dicke erzeugt. Das Trägerband wird bevorzugt durch Vereinzelung der Trägerfolie in einzelne Folienbahnen erzeugt, wobei gegebenenfalls auch zur Herstellung einer ausreichend stabilen Trägerfolie einige Faltungen der blasextrudierten Folien erfolgen. Besonders bevorzugt werden blasextrudierte Folien aus detektionsfähigem Kunststoff auch zur Herstellung schlauchförmiger Verpackungen selbst eingesetzt, sofern diese nicht für den Verzehr vorgesehen sind. Vorteilhaft können somit blasextrudierte Folien aus detektionsfähigem Kunststoff in mehrfacher Weise als Ausgangsstoff für den Verpackungsprozess eingesetzt werden.

In einer bevorzugten Ausführungsform wird Garn mittels in Kunststoffgranulat eingearbeiteter polarisierender gemahlener Partikel (magnetisiertes Eisenoxid) hergestellt. Das magnetisierte Eisenoxid wird in feinste Partikel gemahlen und dem Kunststoffgranulat vor der Bandextrusion der Fäden zugesetzt. Überraschend wurde herausgefunden, dass sich das daraus hergestellte Garn elektromagnetisch bespielen bzw. kodieren lassen und zwar ähnlich wie die Tonbänder früherer Audio- oder Videokassetten. Dies lässt sich vorteilhaft bspw. für eine automatischen Chargenverfolgung oder die Erkennung von Schlaufenlängen und Farben oder zum Zählen nutzen. Prinzipiell sind alle wünschenswerten Informationen in der magnetisch bespiel- und auslesbaren Schlaufe speicherbar. Ferner wurde überraschend festgestellt, dass sich die so gewonnen erfindungsgemäßen Schlaufen mittels Magneten in gewünschte Positionen bringen lassen. Dies ermöglicht große Vorteile beim Maschinenbau, zum Beispiel zum Abbremsen, Zählen oder Führen der Schlaufen ohne Trägerband oder zur Aufnahme weiterer Informationen.

Folgende Aspekte der vorliegenden Erfindung sind ebenfalls Gegenstand der vorliegenden Erfindung:
Aspekt 1:
   Aufhängeschlaufe für Verpackungen, bestehend aus
   a) einem mehrfach verzwirnten oder verflochtenen Kunststoffgarn oder
   b) einem Kunststoffband,
   dadurch gekennzeichnet, dass polarisierbare Partikel
   i. in dem Kunststoff enthalten und/oder
   ii. auf den Kunststoff aufgebracht sind.
Aspekt 2:
   Aufhängeschlaufe nach Aspekt 1, dadurch gekennzeichnet,
   dass der Kunststoff Partikel einer Größe von 50 nm bis 1 mm enthält.
Aspekt 3:
   Aufhängeschlaufe nach Aspekt 1, dadurch gekennzeichnet,
   dass das Kunststoffgarn Partikel in Form von Metallfasern einer Länge zwischen 0,05 mm bis 5 mm enthält.
Aspekt 4:
   Aufhängeschlaufe nach einem der Aspekte 1 bis 3, dadurch gekennzeichnet,
   dass das Kunststoffgarn Partikel mit einem Anteil von 5 bis 50 Gew.-% enthält.
Aspekt 5:
   Aufhängeschlaufe nach einem der vorangehenden Aspekte, dadurch gekennzeichnet,
   dass die Partikel stochastisch in das Garn eingeregelt sind.
Aspekt 6:
   Aufhängeschlaufe nach einem der vorangehenden Aspekte, dadurch gekennzeichnet,
   dass das Kunststoffgarn Aramidfasern, Kohlefasern, Leitruße oder Grafite enthält.
Aspekt 7:
   Aufhängeschlaufe nach einem der vorangehenden Aspekte, dadurch gekennzeichnet,
   dass der Kunststoffanteil des Kunststoffgarn aus PPA, PPS, PES, PEI, PEEK, PEEK-HT, I PC, PBT, PET, PA 6.6 oder PA 4.6.
Aspekt 8:
   Aufhängeschlaufe nach einem der vorhergehenden Aspekte, dadurch gekennzeichnet,
   dass die polarisierbaren Partikel aus magnetisiertem Eisenoxid bestehen.
Aspekt 9:
   Aufhängeschlaufe nach Aspekt 8, dadurch gekennzeichnet,
   dass im Material der Aufhängeschlaufe magnetische Informationen zur Verpackung oder zum Produkt gespeichert sind.
Aspekt 10:
   Verwendung eines detektionsfähigen Kunststoffs zur Herstellung von Schlaufen für die Aufhängung schlauch- oder netzförmiger Verpackungen.
Aspekt 11:
   Verwendung eines detektionsfähigen Kunststoffs zur Herstellung von ebenen Trägerbändern für die Aufnahme einer Vielzahl von Aufhängeschlaufen und zur Herstellung von Rollenkernen für das Aufwickeln des Trägerbandes.
Aspekt 12:
   Verwendung eines detektionsfähigen Kunststoffs nach einem der Aspekte 10 und 11, dadurch gekennzeichnet,
   dass zur Herstellung der Schlaufen und Trägerbänder blasextrudierte Folien als Ausgangsstoff verwendet werden.

## Patentansprüche

1. Verwendung von blasextrudierten Folien aus detektionsfähigem Kunststoff zur Herstellung schlauchförmiger Verpackungen,
wobei polarisierbare Partikel
i. in dem Kunststoff enthalten sind und/oder
ii. auf den Kunststoff aufgebracht sind.

2. Verwendung nach Anspruch 1,
wobei die schlauchförmigen Verpackungen nicht für den Verzehr vorgesehen sind.

3. Verwendung nach Anspruch 1 oder 2,
wobei der Kunststoff polarisierbare Partikel einer Größe von 50 nm bis 1 mm, insbesondere 0,5 µm bis 0,5 mm, vorzugsweise 0,05 mm bis 0,5 mm, enthält.

4. Verwendung nach einem der vorangehenden Ansprüche,
wobei die polarisierbaren Partikel aus magnetisiertem Eisenoxid bestehen.

5. Verwendung nach einem der vorangehenden Ansprüche,
wobei die polarisierbaren Partikel eine annähernd kugelförmige oder unregelmäßige n-eckige Form ausweisen.

6. Verwendung nach Anspruch 5,
wobei sich die angegebenen Größen auf den Äquivalenzdurchmesser, insbesondere auf den volumenäquivalenten Kugeldurchmesser, beziehen.

7. Verwendung nach Anspruch 1 oder 2,
wobei der Kunststoff polarisierbare Partikel in Form von Metallfasern mit einer Länge zwischen 0,05 mm bis 5 mm, insbesondere 0,1 mm bis 3 mm, enthält.

8. Verwendung nach einem der vorangehenden Ansprüche,
wobei die polarisierbaren Partikel vereinzelt oder in Form kleinerer Aggregate mit weniger als 50 Partikeln im Kunststoff enthalten sind.

9. Verwendung nach einem der vorangehenden Ansprüche,
wobei die polarisierbaren Partikel eine weitgehend konstante Partikeldichte in dem Kunststoff aufweisen.

10. Verwendung nach einem der vorangehenden Ansprüche,
wobei die polarisierbaren Partikel mit gleichmäßiger Verteilung in dem Kunststoff dispergiert sind.

11. Verwendung nach einem der vorangehenden Ansprüche,
wobei die polarisierbaren Partikel stochastisch in den Kunststoff eingeregelt sind.

12. Verwendung nach einem der vorangehenden Ansprüche,
wobei die polarisierbaren Partikel eine elektrische und/oder magnetische Polarisierbarkeit aufweisen.

13. Verwendung nach einem der vorangehenden Ansprüche,
wobei der Kunststoff die polarisierbaren Partikel mit einem Gewichtsanteil von 1 Gew.-% bis 50 Gew.-%, insbesondere zwischen 5 Gew.-% und 40 Gew.-%, vorzugsweise zwischen 10 Gew.-% und 30 Gew.-%, enthält.

14. Verwendung nach einem der vorangehenden Ansprüche,
wobei der Kunststoff die polarisierbaren Partikel mit einem Gewichtsanteil von 5 Gew.-% bis 50 Gew.-% enthält.

15. Verwendung nach einem der vorangehenden Ansprüche,
wobei der Kunststoffanteil der blasextrudierten Folien aus PPA, PPS, PES, PEI, PEEK, PEEK-HT, IPC, PBT, PET, PA 6.6 oder PA 4.6 gebildet ist.

16. Verwendung nach einem der vorangehenden Ansprüche,
wobei der detektionsfähige Kunststoff mittels Metalldetektoren elektrisch oder magnetisch oder aber mittels Röntgenspektroskopie detektierbar ist.

17. Verwendung nach einem der vorangehenden Ansprüche zur Detektion von Verpackungsteilen im Endprodukt oder zur Qualitäts- oder Prozesskontrolle.
